# EUROPEAN PATENT SPECIFICATION

(11) **EP 4 188 763 B1**
(45) Date of publication and mention of the grant of the patent: **11.09.2024**
(21) Application number: 21740107.4
(22) Date of filing: 15.07.2021
(51) Int. Cl.: B60T 13/16, B60T 13/68

(54) **IMPROVED HYDRAULIC BRAKE ARRANGEMENT FOR OFF-ROAD VEHICLE**
VERBESSERTE HYDRAULISCHE BREMSANORDNUNG FÜR GELÄNDEFAHRZEUG
AGENCEMENT AMELIORÉ DE FREINS HYDRAULIQUES POUR VÉHICULE TOUT-TERRAIN

(30) Priority: 29.07.2020 IT 202000018436
(43) Date of publication of application: 07.06.2023
(73) Proprietor: CNH Industrial Italia S.p.A., 10156 Torino (IT)
(72) Inventor: CIARROCCHI, Marco, Pietro, 64027 Sant'Omero (TE) (IT)
(74) Representative: CNH Industrial IP Department
(86) International application number: PCT/EP2021/069687
(87) International publication number: WO 2022/023048

(56) References cited:
- EP-A1- 3 275 747
- WO-A1-2019/030105
- WO-A1-2019/215298
- WO-A1-2020/007685
- WO-A1-2020/120738

## Description

### TECHNICAL FIELD

The present invention concerns a hydraulic brake arrangement, in particular a hydraulic brake arrangement for an off-road vehicle, such as an agricultural vehicle.

### BACKGROUND OF THE INVENTION

Off-road vehicles such as agricultural vehicles usually comprises a trailer and use a hydraulic brake arrangement for braking the both the tractor and the trailer as shown in WO2019/215298A1. However, existing hydraulic brake arrangements for tractor-trailer combinations that usually present in off-road vehicles suffer of a plurality of drawbacks.

In particular it is noticed that a tractor may be coupled to different typologies of trailers that can be provided with different typologies of trailer brake arrangement, such as ones known as "single line", others compliant with the socalled Mother Regulation or further compliant with CUNA regulation.

Accordingly, the need is continuously felt to provide a hydraulic brake arrangement for a tractor-trailer combination that allows a tractor to comply with different typologies of trailer.

According to the above, the need is felt to improve existing hydraulic brake arrangement to address the aforementioned drawbacks.

An aim of the present invention is to satisfy the above mentioned needs, in a cost-effective way.

### SUMMARY OF THE INVENTION

The aforementioned aim is reached by a hydraulic brake arrangement as claimed in the appended set of claims.

Preferred embodiments of the invention are realized according to the claims dependent or related to the above independent claims.

### BRIEF DESCRIPTION OF DRAWINGS

For a better understanding of the present invention, a preferred embodiment is described in the following, by way of a non-limiting example, with reference to the attached drawings wherein:
- Figure 1 is a hydraulic schematic showing a first embodiment of a hydraulic braked arrangement according to the present invention; and
- Figure 2 is a hydraulic schematic showing a second embodiment of a hydraulic braked arrangement according to the present invention

### DETAILED DESCRIPTION OF THE INVENTION

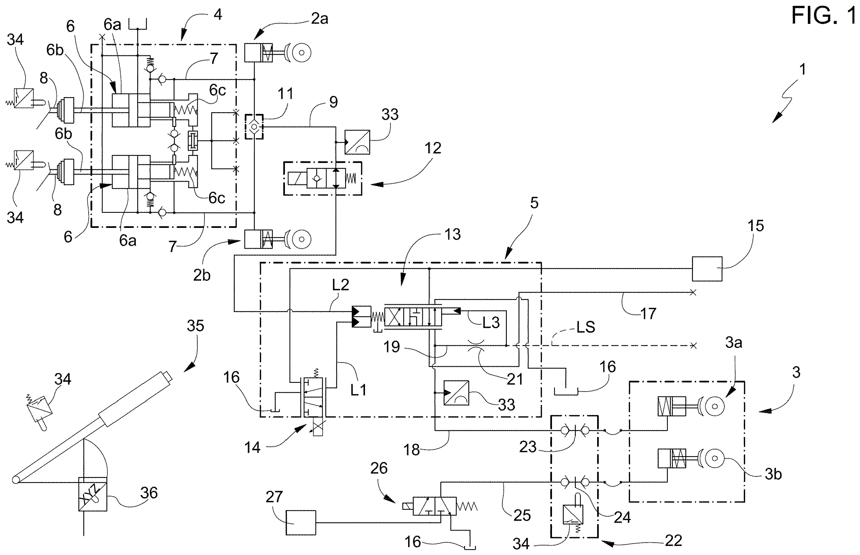

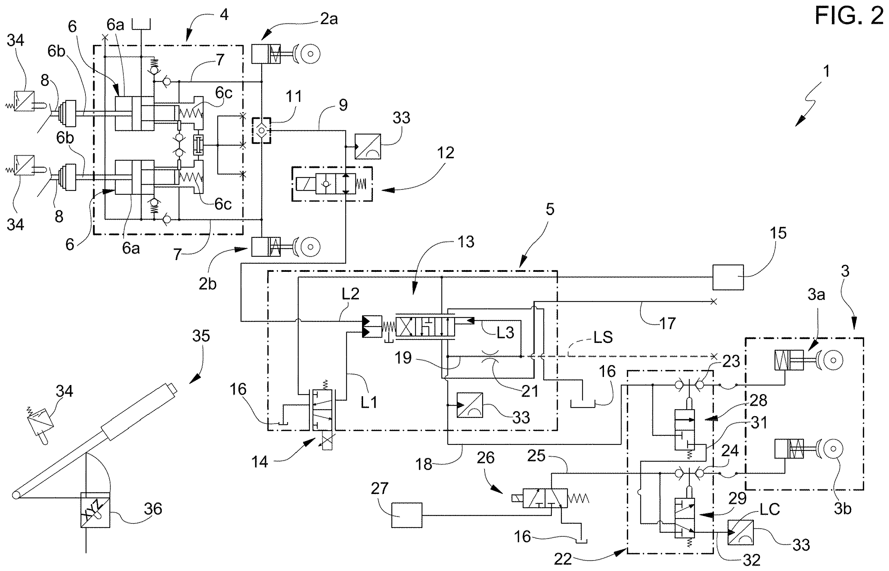

Figures 1 and 2 discloses a hydraulic brake arrangement 1 for a work vehicle, in particular a work vehicle such as a tractor that can be possibly be connected to a trailer, such hydraulic braking arrangement is configured to provide pressurized fluid to rear brakes 2a, 2b of a tractor and to brakes 3, of a trailer.

Hydraulic brake arrangement 1 a tractor brake module 4 configured to control tractor's brakes 2a, 2b and a trailer brake valve module 5 fluidly interposed between tractor's brakes 2a, 2b and trailer's brakes 3.

In particular, the tractor brake module 4 comprises at least a master brake cylinder 6, in particular a master brake cylinder 6 for each of the rear brake 2a, 2b.

In greater particular, each master brake cylinder 6 comprises a housing 6a and a piston 6b configured to slide inside the housing 6a that is further configured to house fluid in pressure. The housing 6a is fluidly connected via a output conduit 7 to a respective brake 2a, 2b. Indeed a motion of the piston 6b inside the housing 6a tends to push away through conduit 8 the fluid in pressure thereby activating the respective brake 2a, 2b.

The piston 6a is actuated by a pedal 8 so that the user, by pushing the pedal 8 can move the piston 6b into the housing 6a. The presence of elastic means 6c allows the countermotion of the piston 6b in its rest position within the housing 6b.

Tractor brake module 4 comprises other valve elements that are per se known and will not be further described in detail, being not essentially linked to the present invention.

Tractor brake module 4 is fluidly connected to trailer brake valve module 5 via a conduit 9 fluidly connecting with output conduits 7 of each master cylinder 6. In particular such connection is achieved by a shuttle valve 11 fluidly interposed between the pair of output conduits 7 and the conduit 9. Such shuttle valve 11 allows the passage of the greater fluid coming from respective conduit 7 linked to the left or the right rear brake 2a, 2b.

Hydraulic brake arrangement 1 comprises a selection valve 12 fluidly interposed on conduit 9 between the tractor brake module 4 and trailer brake valve module 5, such selection valve 12 being configured to allow or deny the fluid passage on conduit 9 towards trailer brake valve module 5 according to a preset signal.

Advantageously, selection valve 12 in an electro-valve, preferably an ON-OFF electro-valve configured to assume a first position into which it allows the fluid communication between the tractor brake module 4 and trailer brake valve module 5 and a second position into which it denies such fluid communication.

Normally, such selection valve 12 is in its first position when de-energized, i.e. it is needed to provide an electrical signal to avoid fluidic communication between tractor brakes 2 and trailer brakes 3.

Trailer brake valve module 5 essentially comprises a dual hydraulic pilot trailer brake valve 13 and a control valve 14 configured to provide one of the two hydraulic pilot signals to the trailer brake valve 13.

As said the control valve 14 is configured to provide a first pilot signal L1 to control the trailer brake valve 13 by modulating the fluid in pressure coming from a source 15 of fluid in pressure of the work vehicle, such as a pump or an accumulator.

Preferably, the control vale 14 is in an electro-valve, preferably a proportional electro-valve configured to modulate the fluid coming from source 15 to generate a signal L1 having the a pressure varying between a maximum value equal to the pressure of such fluid coming from source 15 and a minimum value by fluidly connecting signal L1 to tank 16.

A second signal L2 is imparted to trailer brake valve 13 by the fluid coming from conduit 9 that is, as described above, modulated by selection valve 12.

The trailer brake valve 13 is a preferably a four ways proportional valve configured to regulate the fluid passage between source 15, tank 16, an excess flow line 17 and a trailer brake conduit 18 fluidly directed to trailer brakes 3. Such proportional valve is configured to modulate the fluid coming from source 15 to flow towards trailer brake conduit 18 with a pressure varying between a maximum value equal to the pressure of such fluid coming from source 15 and a minimum value by fluidly connecting trailer brake conduit 18 to tank 16.

In particular, trailer brake valve 13 can assume at least three positions wherein:
- In a first position fluidly connects the source 15 of fluid in pressure to trailer brake conduit 18 and at the same time fluidly connects excess flow line 17 to tank 16;
- In a second position fluidly connects the source 15 of fluid in pressure to both the trailer brake conduit 18 and at the excess flow line 17; and
- In a third position fluidly connects the source 15 of fluid in pressure to excess flow line 17 and trailer brake conduit 18 to tank 16.

On an opposite side of the spool of trailer brake valve 13 with respect to the one where act pilot signals L1, L2, a hydraulic signal L3 picked up by conduit 18 acts to balance the force imparted by signals L1, L2. Such signal L3 is picked-up thanks to a conduit 19 fluidly connecting the spool of trailer brake valve 13 to conduit 18 and provided with a narrowing 21.

Optionally, the hydraulic brake arrangement 1 may comprise further define a load sensing signal LS picked up from conduit 19 downstream to narrowing 21.

As said, trailer brake vale 12 is fluidly connected to trailer brakes 3 via a trailer brake conduit 18. Advantageously, hydraulic brake arrangement 1 comprises a coupling module 22 for allowing the hydraulic coupling of trailer brake conduit 18 with trailer brake arrangement s provided with different typology of brakes, e.g.

Indeed, it is known that according to mother regulation the trailer brakes 3 may comprise a control line brakes 3a and supplementary line brakes 3b for allowing the control of trailer brakes 3 in case of emergency.

Coupling module 22 may comprise a control line coupler 23 and a supplementary line coupler 24. The control line coupler 23 is configured to fluid connect trailer brake conduit 18 with the control line brakes 3a while the supplementary line coupler 24 is configured to allow the connection of supplementary line brakes 3b, if any, to a safe line 25.

Safe line 25 is fluidly connected to a source of fluid 27 and comprises a safety valve 26 fluidly interposed on the safe line 25 between such source 27 and the coupling module 22. The safety valve 26 is configured to allow or deny the fluid passage on safe line 25 towards supplementary control line brakes 3b according to a preset signal.

Advantageously, selection valve 27 in an electro-valve, preferably a two ways - two positions electro-valve configured to assume a first position into which it allows the fluid communication between the source 27 and supplementary line brakes 3b and a second position into which it allows the fluid communication of supplementary line brakes 3b and tank 16.

In particular, selection valve 27 is energized to maintain supplementary line brakes 3b connected to tank 16. If any electrical power problem is present in the work vehicle, than the selection valve 27 de-energize and allows the fluid communication of source 27 with supplementary line brakes 3b, allowing the braking of the trailer.

According to the embodiment of figure 2, coupling module 22 is further provided with a valve arrangement comprising a pair of detection valves 28, 29 fluidly interposed between trailer brake conduit 18 and safe line 25 to provide a hydraulic load signal LC.

In particular, such detection valves 28, 29 are both mechanically actuated valve that are, each, actuated by the coupling of respectively the control line coupler 23 or supplementary line coupler 24.

In greater detail, a first detection valve 28 is fluidly interposed between trailer brake conduit 18 and is an ON-OFF valve configured to allow or deny the fluid communication between the trailer brake conduit 18 and the second detection valve 29 via a conduit 31. In particular, such fluid communication is allowed only when control line coupler 23 couples a control line trailer brake 3a with trailer brake conduit 18.

The second detection valve 29 is fluidly interposed between conduit 31 coming from first detection valve 28 and is a three ways - two positions valve wherein comprising a first port connectable to conduit 31, a second port connectable to an output conduit 32 and a third port connectable to safe line 25.

In a first position, wherein no supplementary line brakes 3b are coupled to supplementary line coupler 24, second selection valve allows the fluidic communication between first port and second port while third port is closed, while, if supplementary line brakes 3b are coupled to supplementary line coupler 24, second selection valve allows the fluidic communication between third port and second port while first port is closed.

Hydraulic brake arrangement 1 further comprises a plurality of pressure sensor means 33 configured to detect the pressure in some crucial points of the hydraulic brake arrangement. In particular, such pressure means 33 are pressure transducers configured to detect the pressure at least in conduit 9, in trailer brake conduit 18 and, according to the embodiment of figure 2, of output conduit 32.

Furthermore, hydraulic brake arrangement 1 further comprises a plurality of switches 34 configured to detect the activation of pedals 8 or of a parking brake 35 of the work vehicle and, according to the embodiment of figure 1, of the coupling of couplers 23, 24.

Moreover, hydraulic brake arrangement 1 further comprises force sensors 36 configured to detect the angular range of movement of the parking brake 35.

All the above detected values are sent to an electronic control unit (not shown) electrically connected to each sensor means 33, 36 or switch 34. Such electronic control unit comprises elaboration means to elaborate such detected values to actuate consequently selection valve 12 and control valve 14 via output electronic control signals.

The operation of the above-described hydraulic arrangement 1 is the following. The user of the vehicle will impart a force on at least one of pedals 8, thereby pushing the related piston 6b into the housing 6a of the master brake cylinder 6 generating a pressure in conduit 7 directed towards the related tractor brake 2a, 2b. Such pressure signal is furthermore sent via conduit 9, passing through shuttle valve 11, and selection valve 12 to trailer brake valve module 5. Here, it generates pilot signal L2 for actuating trailer brake valve 13 that regulates the amount of fluid coming from source 15 that needs to be directed to trailer brake conduit 18 and then to trailer control brakes 3a. During the above operation, pressure is detected in the related conduits thanks to pressure means 33 and activation of pedals 8 or of couplers 23, 24 by switches 34. Similarly, a possible activation of parking brake 35 is detected by the related switch 34 and force sensor 36.

Then, according to the embodiment of figure 1, the activation of the couplers 23, 24 is detected by a related switch 34 configured to assume value ON if both couplers 23, 24 are detected and value OFF if only coupler 23 is detected.

Accordingly, control unit may select a related control map for controlling valves 12 and 14:
- If value of switch 34 of couplers 23, 24 is ON, then a mother regulation trailer is coupled to the tractor and the control unit select a control curve for trailer brakes 3 conform to mother regulation pressure values;
- If value of switch 34 of couplers 23, 24 is OFF, then a single line trailer is coupled to the tractor and the control unit select a control curve for trailer brakes 3 conform to such single line trailer and/or conform to CUNA regulation or any other country regulation.

Instead, according to the embodiment of figure 2, the activation of the couplers 23, 24 is detected by the pressure sensor 33 configured to detect the pressure LC in output conduit 32.

Accordingly, control unit may select a related control map for controlling valves 12 and 14:
- If value of LC is equal to a first memorized pressure value, then the control line coupler 23 is solely coupled;
- If value of LC is equal to a first memorized pressure value, then both couplers 23, 24 are coupled and a mother regulation trailer is coupled to the tractor.

In the following, some use cases will be described according to the embodiment of figure 2.

In a first use case, a single line trailer is connected via coupler 23. Accordingly, valve 12 is in its first position (i.e. de-energized) and depending on the country a CUNA or universal trailer brake curve is selected by software and applied via valve 14 that provides a pilot signal L1. Since L1 and L2 signals acts in parallel and normally signal L2 is smaller than signal L1, signal L2 can be used as safety fallback position in case of electronic faults.

Moreover, by detecting the pressure signal in output conduit 32 it is possible to understand the activation of parking brake 35.

Furthermore, valve 14 can be modulated independently to the pressing condition of pedals in order to avoid possible jack-knife phenomenon in certain conditions wherein the pressure at pedal is insufficient (e.g. in a descendent slope).

Another possible control via valve 14 is to provide a hill holder effect on the trailer. In this use case, for instance, if a CUNA tractor is connected, the trailer is braked when pressure is 0 at brake 3a and unbraked when a fixed pressure of around 15 bar is provided to same brake. So, in case of CUNA tractor, the unbraking pressure level can be provided by piloting valve 14, and, at same time, when valve 14 is open to tank, the pressure at 3a is 0 and the trailer is braked. This condition is equivalent to apply parking brake to trailer and it is selected (via electronic control) when vehicle park brake is actuated. In this case, the sensor on line to brake 3a allow to read the status of trailer and confirm that park brake is applied (according to CUNA requirements). Basically, it is possible to detect trailer park brake.

In a second use case, no trailer is connected to the tractor. Accordingly, to avoid waste of hydraulic energy, valve 12 can be energized, avoiding the fluid communication between tractor brakes 2a, 2b and trailer brakes 3.

In a third use case, a mother regulation trailer is connected via couplers 23, 24. Accordingly, valve 12 is in its first position (i.e. de-energized) and depending a mother regulation trailer brake curve is selected by software and applied via valve 14 that provides a pilot signal L1, as described above to control pressure to trailer brake.

Furthermore, in such case it is possible to obtain a simple fail-safe function thanks to safety valve 26 by detecting the pressure on conduits 9 and 18 and having also a feedback on park brake activation via sensor means 33 coupled to couplers 23, 24. Indeed, by comparing pressure on conduits 9 and 18 it is compared the input from vehicle brake and the output to trailer. If anything is is in fault (hose burst, valve stuck, etc) the output would not be subsequent with the input, and in particular in the worst case of a very important fault, the output would be significantly lower than its expected value. In this case electronic control can operate valve 26 to discharge supply line and suddenly brake the trailer.

In view of the foregoing, the advantages of a hydraulic brake arrangement 1 according to the invention are apparent.

Thanks to the proposed hydraulic brake arrangement it is possible to easily control the brakes of a tractor or tractor-trailer combination of different typologies simply by implementing a single software covering a lot of possible typology of trailer combination with the tractor. This is true for the embodiment of figure 1 that defines a "basic configuration" but is furthermore effective with the improved embodiment of figure 2.

The proposed hydraulic brake arrangement 1 is much simpler and comprises a limited number of components, thereby reducing manufacturing costs and its encumbrance on the tractor.

Furthermore, as known, mother regulation requires two different control logic according to a preset vehicle velocity, namely 12 km/h. Thanks to hydraulic brake arrangement 1 of the present invention, the switch between the two different control logic can be controlled simply via valves 12 and 14.

In particular, if the vehicle is under the preset velocity and the brake pedal is pressed, the electronic control unit retrieve this data and closes valve 12 to avoid that the signal from brake reach the trailer brake valve and at the same time it does not operate valve 14 therefore avoiding the braking of the trailer.

The two proposed embodiments allows, by simply changing the coupling module 22, to allow the connection of very different typology of trailers on the same tractor provided with a hydraulic brake arrangement 1 according to the invention.

It is clear that modifications can be made to the described hydraulic brake arrangement 1 which do not extend beyond the scope of protection defined by the claims.

For example, the proposed valves 12, 14 or 13 may be varied maintaining their claimed function by equivalent devices.

Moreover, tractor brake module 4 may comprise a single master brake cylinder 6 or a different typology of brake cylinder and related activation.

## Claims

1. Hydraulic brake arrangement (1) for a tractor or a tractor-trailer combination, said hydraulic brake arrangement (1) comprising:
- a tractor brake module (4) provided with at least a master brake cylinder (6) configured to provide pressurized fluid to brakes (2a, 2b) of a tractor,
- a trailer brake valve module (5) comprising a hydraulically actuated trailer brake valve (13) and a proportional valve (14),
- a coupling module (22) configured to allow the fluidic communication between said trailer brake valve module (5) and trailer's brakes (3), said coupling module (22) comprising a pair of couplers (23, 24),
wherein said trailer brake valve (13) is controlled by a pair of hydraulic pilot signals (L1, L2) acting on one side of its spool, a first pilot signal (L1) being generated by said proportional valve (14) by modulating a flow of fluid coming from a source (15) of fluid in pressure and a second pilot signal (L2) being picked up via a conduit (9) by said pressurized fluid directed generated by said master brake cylinder (6) to control said brakes (2a, 2b) of said tractor,
said trailer brake valve (13) being configured to modulate the fluid coming from said source (15) to said trailer brakes (3) via a trailer brake conduit (18) between zero to a maximum value, **characterised in that**
said proportional valve (14) is electro-actuated,
said hydraulic brake arrangement (1) further comprises an electro actuated selection valve (12) configured to allow or deny the fluid passage through said conduit (9) towards said trailer brake valve (13),
said hydraulic brake arrangement (1) further comprises pressure sensor means (33) configured to detect the pressure in said conduit (9) and said trailer brake conduit (18), switches (34) configured to detect the activation of said at least one master cylinder (6) and sensors (33, 34) configured to detect the coupling status of said couplers (23, 24),
said hydraulic brake arrangement (1) comprises an electronic unit electrically connected to said pressure sensor means (33) and to said switches (34) to retrieve their detected values and comprises elaboration means to elaborate such detected values to control said selection valve (12) and said proportional valve (14).

2. Hydraulic brake arrangement according to claim 1, wherein said electronic control unit is further configured to detect the activation and the force exerted on a parking brake (35) of said tractor or tractor-trailer combination via related force sensor means (36) and a switch (34), said electronic control unit elaborating such detected values related to parking brake to control said selection valve (12) and said proportional valve (14).

3. Hydraulic brake arrangement according to claim 1 or 2, wherein said selection valve (12) is an ON-OFF valve.

4. Hydraulic brake arrangement according to any of the preceding claims, comprising a master brake cylinder (6) for each of a right tractor brake (2a) and a left tractor brake (2b), said pressurized fluid picked-up by said conduit (9) being selected via a shuttle valve (11) fluidly interposed on the conduits (7) fluidly connecting each master brake cylinder (6) to the respective brake (2a, 2b).

5. Hydraulic brake arrangement according to any of the preceding claims, wherein one pressure sensor means (33) is placed to detect the pressure on said conduit (9) upstream to said selection valve (12).

6. Hydraulic brake arrangement according to any of the preceding claims, wherein one pressure sensor means (33) is placed to detect the pressure on said conduit (18) upstream to said coupling module (22).

7. Hydraulic brake arrangement according to any of the preceding claims, wherein said trailer brake valve (13) is a four ways proportional valve configured to regulate the fluid passage between said source (15), a tank (16), an excess flow line (17) and said trailer brake conduit (18) said trailer brake valve (13) can assume at least three positions wherein:
• In a first position fluidly connects said source (15) to said trailer brake conduit (18) and at the same time fluidly connects excess flow line (17) to tank (16);
• In a second position fluidly connects said source (15) of fluid in pressure to both said trailer brake conduit (18) and said excess flow line (17); and
• In a third position fluidly connects said source (15) to said excess flow line (17) and said trailer brake conduit (18) to tank (16).

8. Hydraulic brake arrangement according to claim 7, wherein a third hydraulic signal (L3) is picked-up on said trailer brake conduit (18) upstream to said coupling module (22), said third hydraulic signal (L3) acting on the spool of said trailer brake valve (13) against the action of said pair of hydraulic pilot signals (L1, L2).

9. Hydraulic brake arrangement according to claim 8, wherein a load sensing signal (LS) is picked-up on from said third hydraulic signal (L3).

10. Hydraulic brake arrangement according to any of the preceding claims, wherein said couplers (23, 24) are a control line coupler (23) configured to fluidly connect said trailer brake conduit (18) to said trailer brakes (3a) and a supplementary line coupler (24) configured to fluidly connect a safe line (25) to a supplementary line brake (3b) of said trailer, said safe line (25) being fluidly connected to a source of fluid (27),
said hydraulic brake arrangement (1) comprising a safety valve (26) fluidly interposed on said safe line (25) between said source (27) and said supplementary line coupler (24), said safety valve (26) being an electro actuated valve configured to allow the passage of fluid from said source (27) toward said supplementary line coupler (24) only if is detected an electronic fault in said tractor.

11. Hydraulic brake arrangement according to claim 10, wherein the coupling of said control line coupler (23) and supplementary line coupler (24) is detected by a switch (34) configured to assume value "ON" only when both said couplers (23, 24) are in coupled condition.

12. Hydraulic brake arrangement according to claim 10, wherein the coupling of said control line coupler (23) and supplementary line coupler (24) is detected by a pressure sensor means (33) configured to detect a pressure value (LC) on an output conduit (32) generated by a valve arrangement fluidly interposed between said trailer brake conduit (18) and said safe line (25).

13. Hydraulic brake arrangement according to claim 12, wherein said valve arrangement comprises a first detection valve (28) and a second detection valve (29),
said first detection valve (28) being fluidically interposed between said trailer brake conduit (18) and said second detection valve (29),
said first detection valve (28) being configured to allow or deny the fluid communication between said trailer brake conduit (18) and said second detection valve (29) if said control line coupler (23) is coupled to said trailer brake (3a),
said second detection valve (29) being fluidly interposed between said first detection valve (28), said safe line (25) and said output conduit (32),
said second detection valve (29) being configured to allow the passage of fluid coming from said first detection valve (28) if only said control line coupler (23) is coupled to said trailer brake (3a) and to allow the passage of fluid coming from said safety line (25) if said supplementary line coupler (24) is coupled to said supplementary line brake (3b).

14. Tractor comprising a pair of brakes (2a, 2b) and a hydraulic brake arrangement (1) according to any of the preceding claims.

15. Tractor-trailer combination, said tractor comprising a pair of brakes (2a, 2b), said trailer comprising a single line brake (3a) and a hydraulic brake arrangement (1) according to any of the preceding claims 1 to 13.

16. Tractor-trailer combination, said tractor comprising a pair of brakes (2a, 2b), said trailer comprising a control line brake (3a) a supplementary line brake (3b) and a hydraulic brake arrangement (1) according to any of the preceding claims 1 to 13.

## Patentansprüche

1. Hydraulische Bremsanordnung (1) für einen Traktor oder ein Traktor-Anhänger-Gespann, wobei die hydraulische Bremsanordnung (1) aufweist:
- ein Traktor-Bremsmodul (4), das mit mindestens einem Hauptbremszylinder (6) versehen ist, der dazu eingerichtet ist, ein unter Druck stehendes Fluid an die Bremsen (2a, 2b) eines Traktors bereitzustellen,
- ein Anhänger-Brems-Ventilmodul (5), das ein hydraulisch betätigtes Anhänger-Bremsventil (13) und ein Proportionalventil (14) aufweist,
- ein Kopplungsmodul (22), das dazu eingerichtet ist, die fluidische Verbindung zwischen dem Anhänger-Brems-Ventilmodul (5) und den Bremsen des Anhängers (3) zuzulassen, wobei das Kopplungsmodul (22) ein Paar von Verbindern (23, 24) aufweist,
wobei das Anhänger-Bremsventil (13) von einem Paar von hydraulischen Steuersignalen (L1, L2) gesteuert wird, die auf eine Seite ihrer Spule wirken, wobei ein erstes Steuersignal (L1) von dem Proportionalventil (14) durch Modulieren eines Fluidflusses, der von einer Quelle (15) von unter Druck stehenden Fluid kommt, erzeugt wird, und wobei ein zweites Steuersignal (L2) über eine Leitung (9) aufgenommen wird, das von einem unter Druck stehenden Fluid von dem Hauptbremszylinder (6) gerichtet und erzeugt wird, um die Bremsen (2a, 2b) des Traktors zu steuern,
wobei das Anhänger-Brems-Ventil (13) dazu eingerichtet ist, das Fluid, das von der Quelle (15) kommt, zu den Bremsen des Anhängers (3) über eine Anhängerbremsleitung (18) zwischen Null und einem maximalen Wert zu modulieren, **dadurch gekennzeichnet, dass**
die hydraulische Bremsanordnung (1) des Weiteren ein elektrisch betätigtes Umschaltventil (12) aufweist, das dazu eingerichtet ist, den Fluiddurchfluss durch die Leitung (9) in Richtung des Anhänger-Brems-Ventils (13) zuzulassen oder zu verhindern,
wobei die hydraulische Bremsanordnung (1) des Weiteren Drucksensormittel (33), die dazu eingerichtet sind, den Druck in der Leitung (9) und der Anhängerbremsleitung (18) zu erfassen, Schalter (34), die dazu eingerichtet sind, die Betätigung des mindestens einen Hauptbremszylinders (6) zu erfassen, und Sensoren (33, 34), die dazu eingerichtet sind, den Kopplungsstatus der Verbinder (23, 24) zu erfassen, aufweist,
wobei die hydraulische Bremsanordnung (1) eine elektronische Einheit aufweist, die elektrisch mit den Drucksensormitteln (33) und den Schaltern (34) verbunden ist, um deren erfasste Werte abzurufen, und die ein Verarbeitungsmittel zur Verarbeitung dieser erfassten Werte zum Steuern des Umschaltventils (12) und des Proportionalventils (14) aufweist.

2. Hydraulische Bremsanordnung nach Anspruch 1, wobei die elektronische Steuereinheit des Weiteren dazu eingerichtet ist, die Betätigung und die Kraft, die auf eine Parkbremse (35) des Traktors oder des Traktor-Anhänger-Gespanns wirkt, über dazu in Bezug stehende Kraftsensormittel (36) und einen Schalter (34) zu erfassen, wobei die elektronische Steuereinheit solche erfasste Werte mit Bezug zu der Parkbremse zum Steuern des Umschaltventils (12) und des Proportionalventils (14) verarbeitet.

3. Hydraulische Bremsanordnung nach Anspruch 1 oder 2, wobei das Umschaltventil (12) ein AN-AUS-Ventil ist.

4. Hydraulische Bremsanordnung nach einem der vorhergehenden Ansprüche, die einen Hauptbremszylinder (6) für jeweils eine rechte Traktorbremse (2a) und eine linke Traktorbremse (2b) aufweist, wobei das unter Druck stehende, von der Leitung (9) aufgenommene Fluid über ein Wechselventil (11) gewählt wird, das in den Leitungen (7) fluidisch eingefügt ist, die jeden Hauptbremszylinder (6) mit der zugehörigen Bremse (2a, 2b) verbinden.

5. Hydraulische Bremsanordnung nach einem der vorhergehenden Ansprüche, wobei ein Drucksensormittel (33) dazu angeordnet ist, den Druck in der Leitung (9) stromauf des Umschaltventils (12) zu erfassen.

6. Hydraulische Bremsanordnung nach einem der vorhergehenden Ansprüche, wobei ein Drucksensormittel (33) dazu angeordnet ist, den Druck in der Leitung (18) stromauf des Kopplungsmoduls (22) zu erfassen.

7. Hydraulische Bremsanordnung nach einem der vorhergehenden Ansprüche, wobei das Anhänger-Brems-Ventil (13) ein Vier-Wege-Proportionalventil ist, das dazu eingerichtet ist, den Fluiddurchfluss zwischen der Quelle (15), einem Tank (16), einer Überlaufleitung (17) und der Anhängerbremsleitung (18) zu regeln, wobei das Anhänger-Brems-Ventil (13) zumindest drei Positionen einnehmen kann, wobei:
- es in einer ersten Position die Quelle (15) mit der Anhängerbremsleitung (18) fluidisch verbindet und gleichzeitig die Überlaufleitung (17) mit dem Tank (16) fluidisch verbindet;
- es in einer zweiten Position die Quelle (15) von unter Druck stehendem Fluid mit beiden aus der Anhängerbremsleitung (18) und der Überlaufleitung (17) fluidisch verbindet; und
- es in einer dritten Position die Quelle (15) mit der Überlaufleitung (17) und die Anhängerbremsleitung (18) mit dem Tank (16) fluidisch verbindet.

8. Hydraulische Bremsanordnung nach Anspruch 7, wobei ein drittes hydraulisches Signal (L3) in der Anhängerbremsleitung (18) stromauf des Kopplungsmoduls (22) aufgenommen wird, wobei das dritte hydraulische Signal (L3) auf die Spule des Anhänger-Brems-Ventils (13) entgegen der Wirkung des Paars von hydraulischen Steuersignalen (L1, L2) wirkt.

9. Hydraulische Bremsanordnung nach Anspruch 8, wobei ein lasterfassendes Signal (LS) von dem dritten hydraulischen Signal (L3) aufgenommen wird.

10. Hydraulische Bremsanordnung nach einem der vorhergehenden Ansprüche, wobei die Verbinder (23, 24) Steuerungsleitungsverbinder (23) sind, die dazu eingerichtet sind, die Anhängerbremsleitung (18) mit den Bremsen des Anhängers (3a) fluidisch zu verbinden, und ein zusätzlicher Leitungsverbinder (24) dazu eingerichtet ist, eine Sicherungsleitung (25) mit einer zusätzlichen Bremsleitung (3b) des Anhängers fluidisch zu verbinden, wobei die Sicherungsleitung (25) mit einer Fluidquelle (27) fluidisch verbunden ist,
wobei die hydraulische Bremsanordnung (1) ein Sicherungsventil (26) aufweist, das in der Sicherungsleitung (25) zwischen der Quelle (27) und dem zusätzlichen Leitungsverbinder (24) fluidisch eingefügt ist, wobei das Sicherungsventil (26) ein elektrisch betätigtes Ventil ist, das dazu eingerichtet ist, den Fluiddurchfluss von der Fluidquelle (27) in Richtung des zusätzlichen Leitungsverbinders (24) nur zuzulassen, wenn ein elektrischer Fehler des Traktors erfasst wird.

11. Hydraulische Bremsanordnung nach Anspruch 10, wobei das Koppeln des Steuerungsleitungsverbinders (23) und des zusätzlichen Leitungsverbinders (24) von einem Schalter (34) erfasst wird, der dazu eingerichtet ist, einen Wert "AN" nur dann anzunehmen, wenn sich beide der Verbinder (23, 24) in einem gekoppelten Zustand befinden.

12. Hydraulische Bremsanordnung nach Anspruch 10, wobei das Koppeln des Steuerungsleitungsverbinders (23) und des zusätzlichen Leitungsverbinders (24) durch ein Drucksensormittel (33) erfasst wird, das dazu eingerichtet ist, einen Druckwert (LC), der durch eine Ventilanordnung erzeugt wird, an einer Ausgabeleitung (32) zu erfassen, die zwischen der Anhängerbremsleitung (18) und der Sicherungsleitung (25) fluidisch eingefügt ist.

13. Hydraulische Bremsanordnung nach Anspruch 12, wobei die Ventilanordnung ein erstes Erfassungsventil (28) und ein zweites Erfassungsventil (29) aufweist,
wobei das erste Erfassungsventil (28) zwischen der Anhängerbremsleitung (18) und dem zweiten Erfassungsventil (29) fluidisch eingefügt ist,
wobei das erste Erfassungsventil (28) dazu eingerichtet ist, eine fluidische Kommunikation zwischen der Anhängerbremsleitung (18) und dem zweiten Erfassungsventil (29) zuzulassen oder zu verhindern, wenn der Steuerungsleitungsverbinder (23) mit der Bremse des Anhängers (3a) gekoppelt ist,
wobei das zweite Erfassungsventil (29) fluidisch zwischen dem ersten Erfassungsventil (28), der Sicherungsleitung (25) und der Ausgangsleitung (32) eingefügt ist,
wobei das zweite Erfassungsventil (29) dazu eingerichtet ist, den Fluiddurchfluss, der von dem ersten Erfassungsventil (28) kommt, nur zuzulassen, wenn der Steuerungsleitungsverbinder (23) mit der Bremse des Anhängers (3a) gekoppelt ist, und den Fluiddurchfluss, der von der Sicherungsleitung (25) kommt, zuzulassen, wenn der zusätzliche Leitungsverbinder (24) mit der zusätzlichen Bremsleitung (3b) gekoppelt ist.

14. Traktor mit einem Paar von Bremsen (2a, 2b) und einer hydraulischen Bremsanordnung (1) nach einem der vorhergehenden Ansprüche.

15. Traktor-Anhänger-Gespann, wobei der Traktor ein Paar von Bremsen (2a, 2b) aufweist, wobei der Anhänger eine einzige Bremsleitung (3a) und eine hydraulische Bremsanordnung (1) nach einem der vorhergehenden Ansprüche 1 bis 13 aufweist.

16. Traktor-Anhänger-Gespann, wobei der Traktor ein Paar von Bremsen (2a, 2b) aufweist, wobei der Anhänger eine Steuerungsbremsleitung (3a), eine zusätzliche Bremsleitung (3b) und eine hydraulische Bremsanordnung (1) nach einem der vorhergehenden Ansprüche 1 bis 13 aufweist.

## Revendications

1. Dispositif de freinage hydraulique (1) pour une combinaison tracteur-remorque, ledit dispositif de freinage hydraulique (1) comprenant :
- un module de frein de tracteur (4) équipé d'au moins un maître-cylindre de frein (6) configuré pour alimenter en fluide sous pression les freins (2a, 2b) d'un tracteur,
- un module de valve de commande de frein d'une remorque (5) comprenant une valve de commande de frein d'une remorque à actionneur hydraulique (13) et une vanne proportionnelle (14),
- un module de couplage (22) configuré pour permettre la communication fluidique entre ledit module de valve de commande de frein d'une remorque (5) et les freins d'une remorque (3), ledit module de couplage (22) comprenant une paire de coupleurs (23, 24),
dans lequel ladite valve de commande de frein d'une remorque (13) est commandée par une paire de signaux pilotes hydrauliques (L1, L2) agissant d'un côté de son tiroir, un premier signal pilote (L1) étant généré par ladite vanne proportionnelle (14) en modulant un débit de fluide provenant d'une source (15) de fluide sous pression et un second signal pilote (L2) capté par une conduite (9) par ledit fluide sous pression dirigé généré par ledit maître-cylindre de frein (6) pour contrôler lesdits freins (2a, 2b) dudit tracteur,
ladite valve de commande de frein de la remorque (13) étant configurée pour moduler le fluide provenant de ladite source (15) vers lesdits freins de remorque (3) par l'intermédiaire d'un conduit de frein de remorque (18) compris entre zéro et une valeur maximale, **caractérisée en ce que** ladite vanne proportionnelle (14) est une vanne à actionnement électrique,
ledit dispositif de freinage hydraulique (1) comprend en outre une vanne directionnelle à actionnement électrique (12) configurée pour autoriser ou interdire le passage du fluide à travers ladite conduite (9) vers ladite valve de commande de frein de la remorque (13),
ledit dispositif de freinage hydraulique (1) comprend en outre des moyens de détection de la pression (33) configurés pour détecter la pression dans ladite conduite (9) et ledit conduit de frein de remorque (18), des commutateurs (34) configurés pour détecter l'activation dudit au moins un maître-cylindre (6) et des capteurs (33, 34) configurés pour détecter l'état du couplage desdits coupleurs (23, 24),
ledit dispositif de freinage hydraulique (1) comprend une unité électronique connectée de manière électrique auxdits moyens de détection de pression (33) et auxdits commutateurs (34) pour récupérer leurs valeurs détectées et comprend des moyens d'élaboration pour calculer de telles valeurs détectées pour contrôler ladite vanne directionnelle (12) et ladite vanne proportionnelle (14).

2. Dispositif de freinage hydraulique selon la revendication 1, dans lequel ladite unité de commande électronique est en outre configurée pour détecter l'activation et la force exercée sur un frein de stationnement (35) dudit tracteur ou de ladite combinaison tracteur-remorque par l'intermédiaire de moyens de détection de force (36) et d'un commutateur (34), ladite unité de commande électronique calculant de telles valeurs de détection liées au frein de stationnement pour contrôler ladite vanne directionnelle (12) et ladite vanne proportionnelle (14).

3. Dispositif de freinage hydraulique selon la revendication 1 ou la revendication 2, dans lequel ladite vanne directionnelle (12) est une vanne tout-ou-rien.

4. Dispositif de freinage hydraulique selon l'une quelconque des revendications précédentes, comprenant un maître-cylindre de frein (6) pour chacun d'un frein de tracteur droit (2a) et d'un frein de tracteur gauche (2b), ledit fluide sous pression aspiré par ladite conduite (9) étant sélectionné par l'intermédiaire d'un clapet double (11) interposé fluidiquement au niveau des conduits (7) reliant de manière fluide chaque maître-cylindre de frein (6) au frein respectif (2a, 2b).

5. Dispositif de freinage hydraulique selon l'une des revendications précédentes, dans lequel un moyen de détection de la pression (33) est installé pour détecter la pression sur ladite conduite (9) en amont de ladite vanne directionnelle (12).

6. Dispositif de freinage hydraulique selon l'une des revendications précédentes, dans lequel un moyen de détection de la pression (33) est installé pour détecter la pression sur ladite conduite (18) en amont dudit moyen de couplage (22).

7. Dispositif de freinage hydraulique selon l'une quelconque des revendications précédentes, dans lequel ladite valve de commande de frein de la remorque (13) est une vanne proportionnelle à quatre voies configurée pour réguler le passage du fluide entre ladite source (15), un réservoir (16), une conduite d'écoulement excédentaire (17) et ledit conduit de frein de la remorque (18), ladite valve de commande de frein de la remorque (13) peut prendre au moins trois positions dans lesquelles :
• Dans une première position, raccorde fluidiquement ladite source (15) audit conduit de frein de la remorque (18) et en même temps raccorde fluidiquement la conduite d'écoulement excédentaire (17) au réservoir (16) ;
• Dans une deuxième position, raccorde fluidiquement ladite source (15) de fluide sous pression à la fois audit conduit de frein de remorque (18) et à ladite conduite d'écoulement excédentaire (17) ; et
• Dans une troisième position, raccorde fluidiquement ladite source (15) à ladite conduite d'écoulement excédentaire (17) et ledit conduit de frein de la remorque (18) au réservoir (16).

8. Dispositif de freinage hydraulique selon la revendication 7, dans lequel un troisième signal hydraulique (L3) est capté sur ledit conduit de frein de remorque (18) en amont dudit module de couplage (22), ledit troisième signal hydraulique (L3) agissant sur le tiroir de ladite valve de commande de frein de la remorque (13) contre l'action de ladite paire de signaux pilotes hydrauliques (L1, L2).

9. Dispositif de freinage hydraulique selon la revendication 8, dans lequel un signal de détection de charge (LS) est capté à partir dudit troisième signal hydraulique (L3).

10. Dispositif de freinage hydraulique selon l'une quelconque des revendications précédentes, dans lequel lesdits coupleurs (23, 24) sont un coupleur de conduites de commande (23) configuré pour raccorder fluidiquement ledit conduit de frein de remorque (18) auxdits freins de remorque (3a) et un coupleur de conduite supplémentaire (24) configuré pour raccorder fluidiquement une conduite de sécurité (25) à une conduite de frein supplémentaire (3b) de ladite remorque, ladite conduite de sécurité (25) étant raccordée fluidiquement à une source de fluide (27),
ledit dispositif de freinage hydraulique (1) comprenant une soupape de sécurité (26) interposée fluidiquement sur ladite conduite de sécurité (25) entre ladite source (27) et ledit coupleur de conduite supplémentaire (24), ladite soupape de sécurité (26) étant une vanne à actionnement électrique configurée pour permettre le passage du fluide de ladite source (27) vers ledit coupleur de conduite supplémentaire (24) uniquement si une défaillance électronique est détectée dans ledit tracteur.

11. Dispositif de freinage hydraulique selon la revendication 10, dans lequel le couplage dudit coupleur de conduite de commande (23) et dudit coupleur de conduite supplémentaire (24) est détecté par un commutateur (34) configuré pour adopter la valeur « ON » uniquement lorsque lesdits coupleurs (23, 24) sont à l'état couplé.

12. Dispositif de freinage hydraulique selon la revendication 10, dans lequel le couplage dudit coupleur de conduite de commande (23) et dudit coupleur de conduite supplémentaire (24) est détecté par un moyen de détection de la pression (33) configuré pour détecter une valeur de pression (LC) au niveau d'une conduite de sortie (32) générée par l'agencement d'une vanne interposée fluidiquement entre ledit conduit de frein de remorque (18) et ladite conduite de sécurité (25).

13. Dispositif de freinage hydraulique selon la revendication 12, dans lequel ledit dispositif de vanne comprend une première vanne de détection (28) et une seconde vanne de détection (29),
ladite première vanne de détection (28) étant interposée fluidiquement entre ledit conduit de frein de remorque (18) et ladite seconde vanne de détection (29),
ladite première vanne de détection (28) étant configurée pour permettre ou refuser la communication fluidique entre ledit conduit de frein de remorque (18) et ladite seconde vanne de détection (29) si ledit coupleur de conduite de commande (23) est couplé audit frein de remorque (3a),
ladite seconde vanne de détection (29) étant interposée fluidiquement entre ladite première vanne de détection (28), ladite conduite de sécurité (25) et ladite conduite de sortie (32),
Ladite seconde vanne de détection (29) étant configurée pour permettre le passage du fluide provenant de ladite première vanne de détection (28) si seul ledit coupleur de conduite de commande (23) est couplé audit frein de remorque (3a) et pour permettre le passage du fluide provenant de ladite conduite de sécurité (25) si ledit coupleur de conduite supplémentaire (24) est couplé à ladite conduite de frein supplémentaire (3b).

14. Tracteur comprenant une paire de freins (2a, 2b) et un dispositif de freinage hydraulique (1) conformément aux revendications précédentes.

15. Combinaison tracteur-remorque, ledit tracteur comprenant une paire de freins (2a, 2b), ladite remorque comprenant une conduite de frein unique (3a) et un dispositif de freinage hydraulique (1) selon l'une quelconque des revendications 1 à 13.

16. Combinaison tracteur-remorque, ledit tracteur comprenant une paire de freins (2a, 2b), ladite remorque comprenant une conduite de frein de commande (3a), une conduite de frein supplémentaire (3b) et un dispositif de freinage hydraulique (1) selon l'une quelconque des revendications 1 à 13.
